Europäisches Patentamt

European Patent Office

Office européen des brevets

(11) Veröffentlichungsnummer: **0 143 298**
**A1**

## (12) EUROPÄISCHE PATENTANMELDUNG

(21) Anmeldenummer: 84112355.7

(51) Int. Cl.⁴: **A 01 C 7/12,** A 01 C 15/16

(22) Anmeldetag: 13.10.84

(30) Priorität: 28.10.83 US 546688

(43) Veröffentlichungstag der Anmeldung: 05.06.85
Patentblatt 85/23

(84) Benannte Vertragsstaaten: **DE FR GB**

(71) Anmelder: **DEERE & COMPANY, 1 John Deere Road,
Moline Illinois 61265 (US)**

(72) Erfinder: **Wolf, Lester Carl, 2578 - 9 1/2 Street, East
Moline Illinois 61244 (US)**

(74) Vertreter: **Sartorius, Peter et al, DEERE & COMPANY
European Office, Patent Department
Postfach 503 Steubenstrasse 36-42,
D-6800 Mannheim 1 (DE)**

(54) **Sävorrichtung.**

(57) Eine Sävorrichtung (10) für eine Sämaschine ist mit einer Dosierungswalze (60) zur Austragung von Saatgut oder Düngemittel ausgerüstet, die oberhalb einer im Gehäuse (34) der Sävorrichtung vorgesehenen Auslaßöffnung (45) vorgesehen ist. Die Welle (62) der Dosierungswalze (60) lagert in einem eine exzentrische Bohrung aufweisenden Lager (70), das jeweils um 180° drehbar ist und somit den Abstand der Dosierungswalze (60) zur Auslaßöffnung verändert. Somit kann die Dosierungswalze unterschiedlichen Bedingungen angepaßt werden.

EP 0 143 298 A1

Sävorrichtung

Die Erfindung bezieht sich auf eine Sävorrichtung mit einer in einem Gehäuse angeordneten, eine Auslaßöffnung aufweisenden Dosierungsvorrichtung, der eine Dosierungswalze auf einer Welle zugeordnet ist, die oberhalb der Auslaßöffnung in einem lösbaren Lager drehbar gelagert ist.

Es ist eine Sämaschine mit einer Dosierungsvorrichtung der eingangs aufgeführten Art bekannt (US-A-3 190 506), die aus einer oberhalb einer Auslaßöffnung des Gehäuses vorgesehenen Dosierungswalze besteht, die mittels einer Welle in einem Lager drehbar gelagert ist. Das Lager besteht aus einer zylindrischen Lagerbuchse mit zwei Flanschstücken, in denen Bohrungen vorgesehen sind, die zur Aufnahme von Schraubenbolzen dienen, so daß das Lager lösbar mit der Gehäusewand der Sävorrichtung verbunden werden kann. Auf diese Weise läßt sich das Lager nach Verschleiß ohne weiteres gegen ein anderes Lager ersetzen.

Demgegenüber liegt der Erfindung die Aufgabe zugrunde, die Dosierungsvorrichtung der Sävorrichtung derart auszubilden und anzuordnen, daß sie auf unterschiedliche Materialbeschaffenheit einstellbar ist. Diese Aufgabe ist dadurch gelöst worden, daß das Lager eine exzentrische Öffnung aufweist und die Drehachse der Welle sowie der Dosierungswalze oberhalb der Auslaßöffnung durch Drehen des Lagers in verschiedene Stellungen einstellbar ist. Durch die vorteilhafte Lagerung der Dosierungswalze in einem einstellbaren Lager läßt sich diese ohne weiteres über der Austragöffnung zum Austrag des Saatgutes bzw. des Düngemittels in ihrer Höhenlage verändern. Auf diese Weise kann die Dosierungswalze unterschiedlichem Erntegut bzw. Düngemittel in kürzester Zeit angepaßt werden, so daß die Umrüstzeiten für die Dosierungswalze sehr klein gehalten werden können. Um eine Feststellung des Lagers zur Aufnahme der Welle der Dosierungsvorrichtung am Gehäuse vornehmen zu können, ist es vorteilhaft, daß das Lager zur Aufnahme der Welle oder eines auf der Welle vorgesehenen zweiten Lagers als Arretierungselemente ausgebildete, sich radial erstreckende Nasen aufweist, die im Bereich einer kreisförmigen Öffnung zur Aufnahme des ersten Lagers in vorgesehene Nuten einsetzbar sind. Ferner ist es vorteilhaft, daß die kreisförmige Öffnung zur Aufnahme des ersten Lagers in Seitenwänden des Gehäuses vorgesehen ist und die Nuten sich von der Öffnung radial nach außen erstrecken und daß das erste Lager aus einer zylindrischen Buchse mit einem Radialflansch gebildet ist, an dessen in Richtung des Gehäuses zeigender Wand mindestens zwei sich radial erstreckende, symmetrisch gegenüberliegende Nasen vorgesehen sind. Durch die Verwendung von Nasen, die in entsprechende am Gehäuse vorgesehene Nuten einrasten können, läßt sich eine genaue Fixierung des Lagers und somit der Welle zur Aufnahme der Dosierungswalze vornehmen, so daß die Dosierungswalze auf ganz bestimmte Höhen über der Austragöffnung eingestellt werden kann. Nachdem eine derartige Einstellung des Lagers vorgenommen ist, läßt sich dieses ohne weiteres festsetzen, so daß im Arbeitseinsatz keine weitere Verstellung möglich ist. In weiterer Ausgestaltung der Erfindung ist es vorteilhaft, daß das zweite in die exzentrische Öffnung des ersten Lagers einsetzbare Lager ebenfalls einen Flansch aufweist, dessen eine Seite gegen die Außenseite des Radialflansches des ersten Lagers zur Anlage bringbar ist, wobei das zweite Lager in dieser Stellung durch Arretierungselemente auf der Welle sicherbar ist, und daß das zweite Lager zur Lagerung der Welle eine Sechskantbohrung aufweist.

Im folgenden wird die Erfindung anhand von lediglich einen Ausführungsweg darstellenden Zeichnungen näher erläutert. Es zeigt:

Fig. 1 eine perspektivische Darstellung einer Sävorrichtung,

Fig. 2    eine Draufsicht entlang der Linie 2 - 2
          gemäß Fig. 1,

Fig. 3    eine Dosierungsvorrichtung in auseinandergezogener Darstellung,

Fig. 4    Lagerelemente zur Aufnahme der Welle der
          Dosierungsvorrichtung,

Fig. 5    eine Ansicht entlang der Linie 5 - 5
          gemäß Fig. 4,

Fig. 6    eine Seitenansicht entlang der Linie 6 - 6
          gemäß Fig. 3, wobei Teile des Gehäuses
          zur besseren Darstellung des Dosierungsrades weggelassen sind,

Fig. 7    eine Ansicht entlang der Linie 7 - 7
          gemäß Fig. 6,

Fig. 8    eine Seitenansicht entlang der Linie 8 - 8
          gemäß Fig. 7, teilweise im Schnitt,

Fig. 9    eine ähnliche Ansicht wie in Fig. 8, wobei das exzentrische Lager um 180° weitergedreht ist und das Dosierungsrad mit Bezug auf die Austragöffnung im Gehäuse
          sich in einer unteren Stellung befindet.

In der Zeichnung ist mit 10 eine Sävorrichtung bezeichnet,
die mit einem Rahmen 14 ausgerüstet ist, der über parallel
verlaufende Lenker 12 an einen Hauptrahmen 16 einer in
der Zeichnung der Einfachheit halber nicht dargestellten
Sämaschine vertikal schwenkbar angeschlossen ist.

Der Rahmen 14 stützt sich über zwei einstellbare Bodenräder 18 auf dem Boden ab, über die die Eindringtiefe der in der Zeichnung nicht dargestellten Furchenöffnungsvorrichtung gesteuert wird. Zwei Scheibenschare 20 sind über einen Träger hinter den Bodenrädern 18 an den Rahmen 14 angeschlossen. Die Scheibenschare 20 schließen nach Einlegen des Saatgutes die Furche, wobei sie seitlich auf die Furche einen Druck ausüben, so daß der Boden von oben her in die Furche fällt und das Saatgut zudeckt.

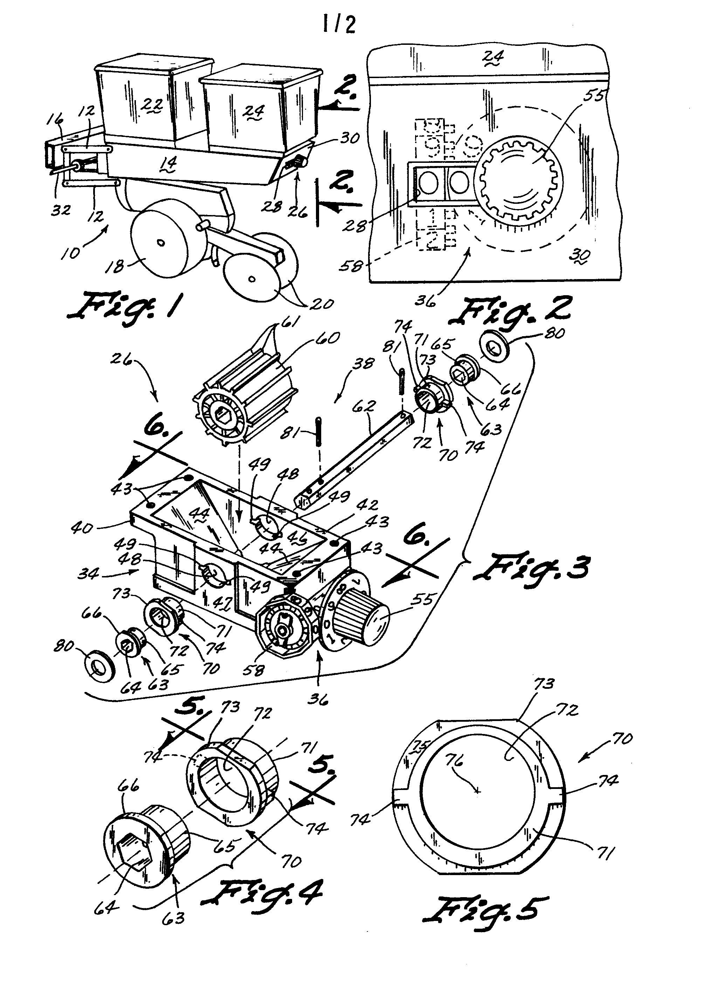

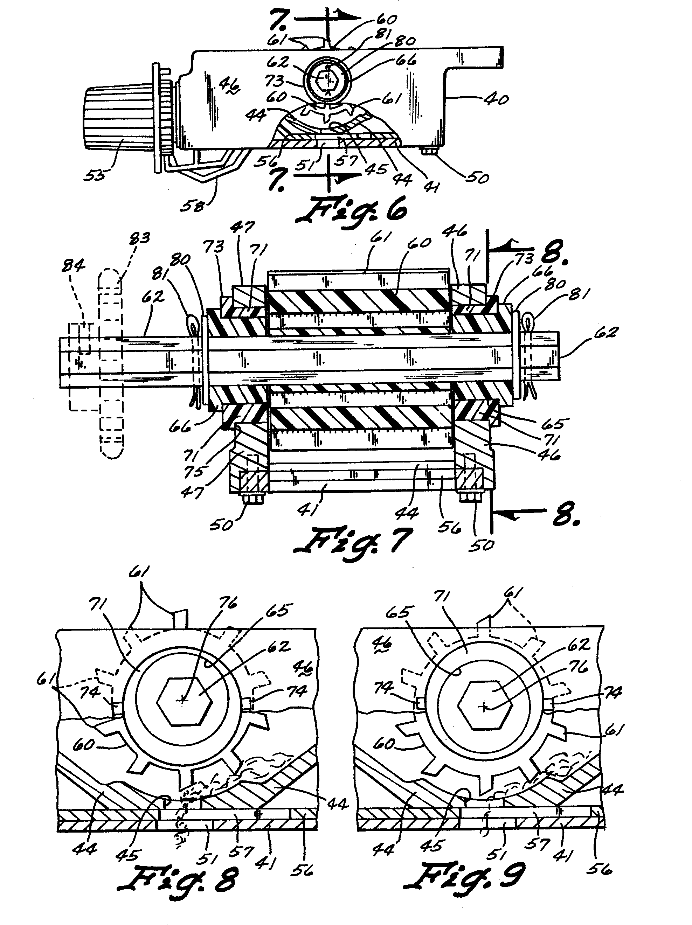

Der obere Teil des Rahmens 14 weist einen Sammelbehälter 22 für Saatgut auf, in dem eine in der Zeichnung nicht dargestellte Dosierungsvorrichtung angeordnet ist. Auf dem Rahmen 14 ist ferner ein Sammelbehälter 24 angeordnet, der mit einer Dosierungsvorrichtung 26 (Fig. 3) ausgestattet ist, die durch eine in der Rückseite eines Querträgers 30 vorgesehene Fensteröffnung 28 sichtbar ist. Beide Dosierungsvorrichtungen 26, einmal für das Saatgut und einmal für das Düngemittel, werden über eine Hauptantriebsvorrichtung 32 angetrieben (Fig. 1).

Wie aus Fig. 3 hervorgeht, ist die Dosierungsvorrichtung 26 innerhalb eines Gehäuses 34 aufgenommen, in dem eine Einstellvorrichtung und eine Anzeigevorrichtung 36 sowie ein Dosierungsorgan 38 angeordnet sind.

Wie ferner aus den Figuren 3 und 6 hervorgeht, weist das Gehäuse 34 einen Gehäusemittelteil 40 mit einer Bodenplatte 41 auf. Der Gehäusemittelteil 40 ist mit einem oberen Rand 42 ausgestattet, in dem zahlreiche Gewindebohrungen 43 vorgesehen sind, über die der Gehäusemittelteil 40 an die Unterseite des Sammelbehälters für Düngemittel angeschlossen ist, wobei durch die Gewindebohrungen Schraubenbolzen eingeführt werden. Der Gehäusemittelteil 40 weist einen V-förmig ausgebildeten Boden 44 auf, wobei die beiden nach unten zusammenlaufenden Bodenteile eine Auslaßöffnung 45 aufweisen und zwischen Seitenwänden 46 und 47 angeordnet sind, in der untereinander fluchtende kreisförmige Öffnungen 48 vorgesehen sind, in denen jeweils zwei gegenüberliegende Nuten 49 vorgesehen sind. Die Bodenplatte 41 weist einen planen Teil mit zahlreichen Öffnungen zur Aufnahme von Anschlußbolzen 50 auf, die in entsprechende Gewindebohrungen an der Unterseite des Gehäusemittelteils 40 eingeführt werden, um somit die Bodenplatte 41 an die Unterseite des Gehäusemittelteiles 40 anzuschließen. In dem planen Teil der Bodenplatte 41 befindet sich eine Schlitzöffnung 51, die direkt unterhalb der länglichen Auslaßöffnung 45 vorgesehen ist, wenn das Gehäuse 34, wie aus Fig. 6 hervorgeht, entsprechend zusammengebaut ist.

Wie aus den Figuren 3 und 6 hervorgeht, weist die Stellvorrichtung 36 für die Dosierungsvorrichtung 26 einen Stellknopf 55 auf, der mit einem Dosierungsschieber 56 wirkungsmäßig verbunden ist, der im Gehäuse 34 zwischen dem V-förmigen Boden 44 und der Bodenplatte 41 angeordnet ist. Der Dosierungsschieber 56 weist eine Dosierungsöffnung 57 auf. Durch Drehen des Stellknopfes 55 wird der Dosierungsschieber 56 verstellt und somit der Durchlaßquerschnitt der Auslaßöffnung 45. Hierdurch kann der Ausfluß des Düngemittels aus dem Gehäuse 34 gesteuert werden. Ein Folgerad 58 ist wirkungsmäßig mit dem Stellknopf 55 verbunden, so daß die auf dem Stellknopf 55 und dem Folgerad 58 angeordneten Zahlen durch die Fensteröffnung 28 im Gehäuse 34 (siehe Fig. 2) sichtbar sind.

Das Dosierungsorgan 38 ist insbesondere aus Fig. 3 erkennbar. Eine Dosierungswalze 60 mit sich radial erstreckenden Förderleisten bzw. Rippen 61 befindet sich auf einer Sechskantwelle 62, die endseitig in Lagern 63 aufgenommen ist. Ein jedes Lager 63 weist eine der Sechskantwelle angepaßte Sechskantbohrung 64 sowie eine ringförmige Lagerfläche 65 und einen Flansch 66 auf.

Ein exzentrisch ausgebildetes Lager 70 weist einen Buchsenteil 71 mit einer kreisförmigen Öffnung 72 auf, die in dem Buchsenteil 71 (siehe Fig. 5) exzentrisch angeordnet ist.

An das stirnseitige Ende des Buchsenteils 71 ist ein Radialflansch 73 angeordnet, der mit zwei gegenüberliegenden sich radial erstreckenden Nasen 74 versehen ist, die an der Rückseite des Radialflansches 73 plaziert sind. In einer jeden Öffnung 48 der Seitenwand 46 bzw. 47 ist das exzentrisch ausgebildete Lager 70 aufgenommen, wobei die Nasen 74 in die Nuten 49 einrasten und damit verhindern, daß sich die exzentrischen Lager 70 in den Öffnungen 48 der Seitenwände 46 und 47 drehen. Die innere Stirnfläche 75 des Radialflansches 73 liegt gegen die Außenoberfläche der entsprechenden Seitenwand 46 bzw. 47 an, so daß die Lager 70 gegen eine Axialverschiebung gesichert sind. Die Lager 63 sind in der exzentrischen Bohrung 72 des Lagers 70 drehbar gelagert und entsprechend gesichert. Die exzentrische Öffnung bzw. Bohrung 72 nimmt hierzu die ringförmige Lagerfläche 65 des Lagers 63 in der Öffnung 72 auf, wobei der Flansch 66 gegen die äußere Oberfläche des Radialflansches 73 anliegt. Ringscheiben 80, die ebenfalls auf der Welle 62 angeordnet sind, liegen gegen die Stirnfläche des Flansches 66 an und sind mittels eines Splintes 81 gesichert, so daß die Sechskantwelle 62 sich in der Öffnung 72 drehen kann, ohne daß eine Axialverschiebung der Sechskantwelle möglich ist. Die Drehachse der Sechskantwelle verläuft koaxial zum Mittelpunkt 76 der Bohrung 72 (Fig. 5). Auf der Sechskantwelle 62 ist endseitig ein Antriebsrad, beispielsweise ein Kettenrad bzw. Zahnrad 83, angeordnet, das wirkungsmäßig mit der Hauptantriebsvorrichtung 32 verbunden ist (Fig. 7 und 1).

Wie insbesondere aus den Figuren 5 bis 8 hervorgeht, ist das exzentrisch ausgebildete Lager 70 so ausgerichtet, daß der Mittelpunkt 76 der Öffnung 72 und die Drehachse der Sechskantwelle 62 sich in ihren oberen Stellungen befinden (siehe Fig. 9). In der oberen Stellung weisen die Rippen 61 der Dosierungswalze 60 einen maximalen Abstand zur Auslaßöffnung 45 auf. Diese entsprechende Stellung der Dosierungswalze 60 oberhalb der Auslaßöffnung 45 ist dann erwünscht, wenn dem chemischen Granulat Tonbestandteile beigemischt sind und eine Dosierung mit diesen beiden Materialien vorgenommen werden soll.

Soll beispielsweise der Abstand zwischen der Dosierungswalze und der Auslaßöffnung 45 verändert werden, wenn beispielsweise dem chemischen Granulat Sand beigemischt wird, so wird das exzentrisch ausgebildete Lager lediglich um 180° gedreht. Eine derartige Verstellung kann nach Entfernen des Splintes 81 durchgeführt werden, wobei dann das exzentrische Lager 70 zusammen mit dem Lager 63 und der Ringscheibe 80 von dem Gehäuse 34 weggezogen werden, bis die Nasen 74 aus den Nuten 49 herausgeführt sind. Danach wird das Lager 70 um 180° gedreht, so daß die Nasen 74 zu den Nuten 49 ausgerichtet sind. Danach können die Lager 70 zusammen mit den Lagern 63 und den Ringscheiben 80 in Richtung des Gehäuses 34 verschoben werden, um die Nasen 74 in die Nuten 49 einzusetzen. Anschließend wird der Splint 81 in die entsprechende Bohrung wieder eingeführt. In Fig. 9 ist die Dosierungswalze 60 in ihrer unteren Stellung dargestellt.

## Patentansprüche

1. Sävorrichtung (10) mit einer in einem Gehäuse (34) angeordneten, eine Auslaßöffnung (45) aufweisenden Dosierungsvorrichtung (26), der eine Dosierungswalze (60) auf einer Welle (62) zugeordnet ist, die oberhalb der Auslaßöffnung (45) in einem lösbaren Lager (63, 70) drehbar gelagert ist, dadurch gekennzeichnet, daß das Lager (70) eine exzentrische Öffnung (72) aufweist und die Drehachse (76) der Welle (62) sowie der Dosierungswalze (60) oberhalb der Auslaßöffnung (45) durch Drehen des Lagers (70) in verschiedene Stellungen einstellbar ist.

2. Sävorrichtung nach Anspruch 1, dadurch gekennzeichnet, daß das Lager (70) zur Aufnahme der Welle (62) oder eines auf der Welle vorgesehenen zweiten Lagers (63) als Arretierungselemente ausgebildete, sich radial erstreckende Nasen (74) aufweist, die im Bereich einer kreisförmigen Öffnung (48) zur Aufnahme des ersten Lagers (70) in vorgesehene Nuten (49) einsetzbar sind.

3. Sävorrichtung nach Anspruch 1 oder 2, dadurch gekennzeichnet, daß die kreisförmige Öffnung (48) zur Aufnahme des ersten Lagers (70) in Seitenwänden (46, 47) des Gehäuses (34) vorgesehen ist und die Nuten (49) sich von der Öffnung (48) radial nach außen erstrecken.

4. Sävorrichtung nach einem oder mehreren der vorherigen Ansprüche, dadurch gekennzeichnet, daß das erste Lager (70) aus einer zylindrischen Buchse mit einem Radialflansch (73) gebildet ist, an dessen in Richtung des Gehäuses (34) zeigender Wand mindestens zwei sich radial erstreckende, symmetrisch gegenüberliegende Nasen (74) vorgesehen sind.

5. Sävorrichtung nach einem oder mehreren der vorherigen Ansprüche, dadurch gekennzeichnet, daß das zweite in die exzentrische Öffnung (72) des ersten Lagers (70) einsetzbare Lager (63) ebenfalls einen Flansch (66) aufweist, dessen eine Seite gegen die Außenseite des Radialflansches (73) des ersten Lagers zur Anlage bringbar ist, wobei das zweite Lager in dieser Stellung durch Arretierungselemente (Splint 81) auf der Welle (62) sicherbar ist.

6. Sävorrichtung nach einem oder mehreren der vorherigen Ansprüche, dadurch gekennzeichnet, daß das zweite Lager (63) zur Lagerung der Welle (62) eine Sechskantbohrung aufweist.

0143298

1/2

Fig. 1

Fig. 2

Fig. 3

Fig. 4

Fig. 5

Fig.6

Fig.7

Fig.8

Fig.9

**Europäisches Patentamt**

**EUROPÄISCHER RECHERCHENBERICHT**

0143298

Nummer der Anmeldung

EP 84 11 2355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | US-A-3 190 506 (E.M. SELZLER)<br>* Spalte 2, Zeilen 46-68; Figuren 3, 5 *<br><br>-----  | 1 | A 01 C 7/12<br>A 01 C 15/16 |

**RECHERCHIERTE SACHGEBIETE (Int. Cl.4)**

A 01 C 7/00
A 01 C 15/00

Der vorliegende Recherchenbericht wurde für alle Patentansprüche erstellt.

| Recherchenort | Abschlußdatum der Recherche | Prüfer |
|---|---|---|
| BERLIN | 03-01-1985 | WUNDERLICH J E |